# EUROPEAN PATENT APPLICATION

(11) **EP 4 730 744 A1**
(43) Date of publication of application: **22.04.2026**
(21) Application number: 25208096.5
(22) Date of filing: 10.10.2025
(51) Int. Cl.: H04L 47/62, H04L 47/625, H04L 47/6295, H04L 49/109, H04L 49/20

(54) **PRIORITY MASKING FOR QOS ROUTING**

(30) Priority: 18.10.2024 US 202418920133
(71) Applicant: Microsoft Technology Licensing, LLC, Redmond, WA 98052 (US)
(72) Inventor: YILMAZ, YALCIN, Redmond, 98052 (US); TANG, MONICA MAN KAY, Redmond, 98052 (US)
(74) Representative: CMS Cameron McKenna Nabarro Olswang LLP

(57) **Abstract**

This document relates to computer networking. For instance, the disclosed techniques provide for prioritizing packets based on Quality of Service ("QoS") levels within a networking device, such as a router. A router or other networking device consistent with the disclosed implementations can perform priority masking of received packets by comparing QoS priority values of the received packets to a designated QoS priority level. Packets having QoS priority values exceeding the designated QoS priority level can proceed to arbitration, whereas other packets can be masked to prevent them from proceeding to arbitration.

## Description

### BACKGROUND

Computer network conditions often change as a result of various factors. For instance, network congestion can occur during periods of high network usage, and network congestion can increase latency and/or reduce bandwidth. Network device failures occasionally impact networks as well, and device failures can also increase latency and/or reduce bandwidth. Various approaches are employed to mitigate these issues, such as congestion control algorithms, redundant deployment of network devices, and sophisticated routing algorithms that use multiple redundant paths through a network to mitigate potential failures.

### SUMMARY

This Summary is provided to introduce a selection of concepts in a simplified form. These concepts are further described below in the Detailed Description. This Summary is not intended to identify key features or essential features of the claimed subject matter, nor is it intended to be used to limit the scope of the claimed subject matter.

The description generally relates to techniques for computer networking. One example relates to a computer networking method that can include receiving packets having respective QoS priority values. The method can also include performing comparisons of the respective QoS priority values of the received packets to a designated QoS priority level. The method can also include, based on the comparisons, selecting a subset of packets from the received packets for resource arbitration. The method can also include performing resource arbitration on the selected subset of packets. The method can also include allocating a particular resource to individual packets of the selected subset based on the resource arbitration.

Another example includes a networking device that can include input ports configured to receive packets that arrive at the networking device. The device can also include output ports configured to emit packets from the networking device. The device can also include switching resources configured to selectively connect individual input ports to individual output ports. The device can also include a controller. The controller can be configured to determine respective QoS priority values of the received packets. The controller can also be configured to perform comparisons of the QoS priority values of the received packets to a designated QoS priority level. The controller can also be configured to, based on the comparisons, select a subset of packets from the received packets for resource arbitration. The controller can also be configured to perform resource arbitration on the selected subset of packets. The controller can also be configured to allocate a particular resource to individual packets of the selected subset based on the resource arbitration.

Another example includes a network-on-chip that can include endpoints configured to communicate packets with different QoS priority values. The network-on-chip can also include routers. The routers can include input ports configured to receive the packets from the endpoints. The routers can also include output ports configured to emit the packets to the endpoints. The routers can also include switching resources configured to selectively connect individual input ports to individual output ports. The routers can also include controllers. The controllers can be configured to determine respective QoS priority values of the received packets. The controllers can also be configured to perform comparisons of the QoS priority values of the received packets to a designated QoS priority level. The controllers can also be configured to, based on the comparisons, select a subset of packets from the received packets for resource arbitration. The controllers can also be configured to perform resource arbitration on the selected subset of packets. The controllers can also be configured to allocate a particular resource to individual packets of the selected subset based on the resource arbitration.

The above-listed examples are intended to provide a quick reference to aid the reader and are not intended to define the scope of the concepts described herein.

### BRIEF DESCRIPTION OF THE DRAWINGS

The Detailed Description is described with reference to the accompanying figures. In the figures, the left-most digit(s) of a reference number identifies the figure in which the reference number first appears. The use of similar reference numbers in different instances in the description and the figures may indicate similar or identical items.
FIG. 1 illustrates an example router, consistent with some implementations of the present concepts.
FIG. 2 illustrates an example priority masking algorithm, consistent with some implementations of the present concepts.
FIGS. 3, 4, 5, 6, 7A, 7B, 7C, and 7D illustrate examples of applying the priority masking algorithm to network packets, consistent with some implementations of the present concepts.
FIG. 8A illustrates an example of a system in which the disclosed implementations can be performed, consistent with some implementations of the present concepts.
FIG. 8B illustrates an example of a network-on-chip in which the disclosed implementations can be performed, consistent with some implementations of the present concepts.
FIG. 9 illustrates an example computer networking method or technique, consistent with some implementations of the disclosed techniques.
FIG. 10 illustrates an example graphical user interface, consistent with some implementations of the disclosed techniques.

### DETAILED DESCRIPTION

### OVERVIEW

As noted above, there are various types of problems that can occur on a network and can result in dropped packets, increased latency, and/or reduced bandwidth. Furthermore, certain types of network traffic may have specific latency and/or bandwidth constraints that should be met to ensure adequate application performance. For instance, consider a video conferencing application that delivers high-quality video and audio streams to users participating in a teleconference. For such an application, high bandwidth is important to ensure that each user receives a high-fidelity experience with good video and audio quality. In addition, low latency is also important for these applications, because too much latency can result in video and/or audio delays that can negatively impact communication among participants.

One way to mitigate the impact of network issues on bandwidth- or latency-sensitive applications involves implementing quality of service or "QoS" policies within a network device, such as a router. QoS policies can involve prioritizing bandwidth-sensitive or latency-sensitive network traffic over other network traffic. For instance, QoS policies can assign different QoS values to packets, and schedule packets in with higher QoS values before packets with lower QoS values. Different policies can be employed to assign QoS values to different packets, e.g., by assigning higher QoS values to traffic relating to a specific application, to or from a specific device, and/or traffic relating to a specific service (e.g., gaming, or audio/video streaming services).

One way to implement QoS priority masking in hardware could involve using dedicated circuitry for each QoS level above a base level (e.g., QoS level 0). Thus, for instance, a router that provides four different QoS levels might have three separate layers of priority masking hardware, one for each QoS level above 0. Each hardware layer can be responsible for masking individual packets based on their QoS level, and each hardware layer can also include signaling circuitry to indicate that other packets should be prioritized because they are blocking high priority packets. While these techniques can provide QoS prioritization within a given router or other networking device, the separate hardware used for each QoS priority level can be expensive in terms of computational costs, manufacturing costs, power consumption, and overall complexity.

The disclosed implementations can employ a flexible QoS prioritization scheme that effectively prioritizes packets according to their QoS values without complex priority masking hardware. For instance, a router or other networking device consistent with the disclosed concepts can employ a single QoS masking layer that is shared by packets of different QoS levels. This can be implemented using counters to track the ingress and egress of packets that have QoS priority values exceeding a designated QoS priority level (e.g., a configurable threshold value stored in a register). Packets having QoS priority values exceeding the designated QoS priority level can proceed to arbitration, whereas other packets can be masked to prevent them from proceeding to arbitration. Specific hardware and algorithms are described in more detail below.

### TERMINOLOGY

The term "Quality of Service" or "QoS" refers to various approaches for prioritizing network traffic, e.g., to meet latency, bandwidth, or other network quality considerations. For instance, QoS prioritization can be employed to ensure that traffic to or from a specific application, to or from a specific service, and/or to or from a specific device is prioritized over other traffic. A "QoS priority value" is a value indicating the QoS level of a particular network packet. The examples disclosed herein use integers as QoS priority values, but other schemes can be employed, e.g., Boolean values, floating point values, alphabetical values, etc.

The term "resource arbitration," as used herein, means selecting a particular packet over at least one other packet for access to a resource. For instance, packets can compete with other packets for access to an output port of a router, a buffer, etc. The term "masking," as used herein, refers to maintaining a value indicating whether a particular packet will proceed to arbitration. While bit strings are used herein with a "1" indicating that a packet will proceed to arbitration and a "0" indicating that packet will not proceed to arbitration, other implementations are plausible, e.g., a "0" could indicate that a packet will proceed to arbitration and a "1" could indicate otherwise. Packets can be allocated resources based on results of the arbitration. The term "based on" in reference to a particular criterion (such as a comparison or arbitration) means "based solely on" the particular criterion or "based at least in part on the particular criterion," e.g., and one or more other criteria.

### EXAMPLE ROUTER

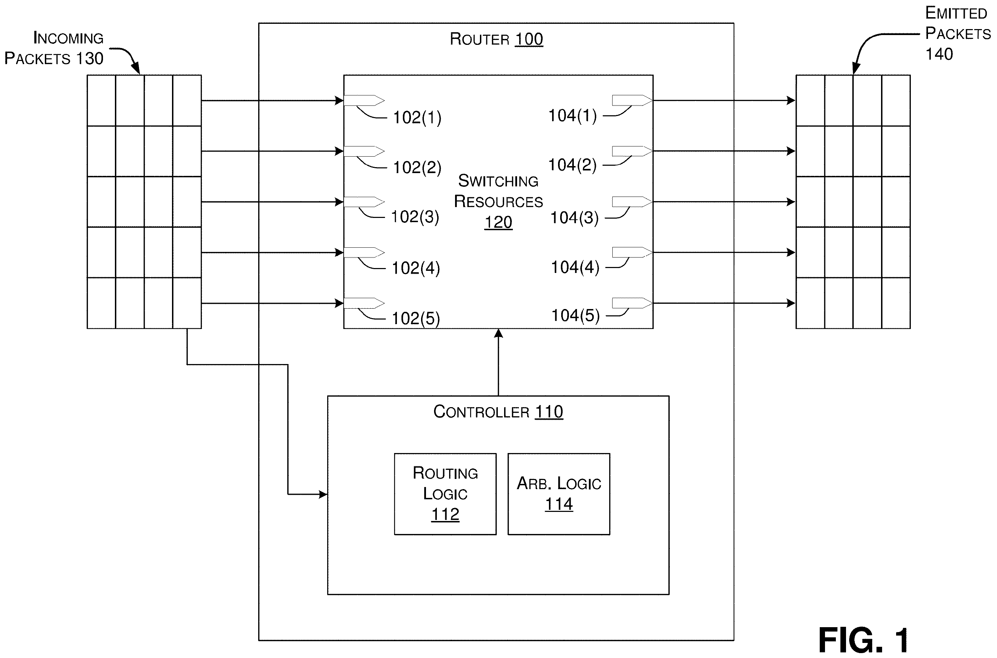

FIG. 1 shows an example router 100 having router input ports 102(1), 102(2), 102(3), 102(4), and 102(5), and router output ports 104(1), 104(2), 104(3), 104(4), and 104(5). A controller 110 controls switching resources 120, which direct incoming packets 130 received via any of the router input ports to any of the router output ports as emitted packets 140. The controller includes routing logic 112 and arbitration logic 114 that control the switching resources 120.

The switching resources 120 can be implemented as any kind of circuit that can connect a router input port to a router output port. For instance, some implementations may employ a full or partial crossbar switch or multiplexer as switching resources. In some cases described further below, router 100 is implemented in a Network-On-Chip, in which case the switching resources can be provided via on-chip network.

The routing logic 112 determines the router output port for each of the received packets using a routing algorithm. For instance, the routing logic can employ a routing table to look up the next hop address of each incoming packet. Then, the router input port over which a given incoming packet is received is connected to the identified router output port by controlling the switching resources 120.

The arbitration logic 114 controls when packets receive access to various resources, such as router output ports or memory buffers. For instance, as discussed more below, the arbitration logic can determine the QoS priority value of a given packet and then selectively mask low-priority packets. In this manner, the arbitration logic can help ensure that packets with high QoS priority values are prioritized over other packets for accessing a particular resource.

### EXAMPLE PRIORITY MASKING ALGORITHM

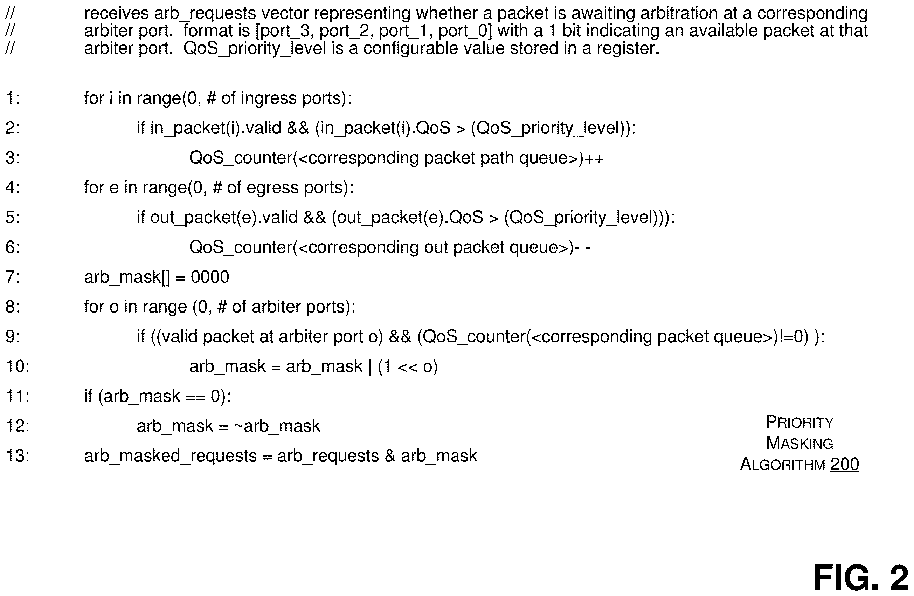

FIG. 2 illustrates an example priority masking algorithm 200, which is shown as pseudocode for implementing the present concepts. The example algorithm assumes there are four arbiter input ports. A bit vector arb_requests is received, where each bit indicates whether a packet is available at a corresponding arbiter input port for processing by arbitration logic 114. The format is [port_3, port_2, port_1, port_0]. Thus, a value of [1000] indicates that a packet is available at arbiter input port 3 but not at arbiter input ports 2, 1, or 0, a value of [0100] indicates that a packet is available at arbiter port 2 but not at arbiter ports 3, 1, or 0, and so on. QoS_priority_level is a configurable value that can be stored in a register. As discussed more below, QoS_priority_level is employed as a threshold, where packets having a QoS priority value equal to or below QoS_priority_level are masked so that they do not proceed to arbitration unless they are blocking another packet with a QoS priority value that exceeds QoS_priority_level.

Line 1 includes a for loop over each ingress port, e.g., router input ports 102(1), 102(2), 102(3), 102(4), and/or 102(5). Line 2 is an if statement that evaluates whether a packet received via ingress port i is valid and has a QoS priority value higher than a QoS_priority_level. If so, then a value QoS_counter is incremented at line 3. QoS_counter can be a queue-specific value, e.g., QoS_counter(0) can be a counter for a queue with index 0, QoS_counter(1) can be counter for a queue with index 1, and so on. In some implementations, each queue is associated with a particular resource, such as a router input port or output port. Packets within a given queue having a QoS_counter value of greater than zero are prioritized over packets in other queues with QoS_counter values of zero. Said another way, packets in a given queue cease to be prioritized once the QoS_counter value for that queue falls to zero.

Line 4 includes a for loop over egress ports e, e.g., router output ports 104(1), 104(2), 104(3), 104(4), and/or 104(5). Line 5 is an if statement that evaluates whether a packet that leaves the router is valid and has a QoS value higher than the configured priority level. If so, then the value QoS_counter is decremented at line 6.

Line 7 initializes arb_mask to 0000. Line 8 is a for loop over the number of ports o for arbitration logic. Line 9 is an if statement that evaluates whether a valid packet is available at arbiter port o and whether the QoS_counter for the queue has a value other than zero. If so, arb_mask for that bit position is set to 1 by a bitwise OR operation. Here, a 1 value indicates that the packet at the corresponding arbiter port can proceed to arbitration, and a value of 0 indicates that the packet will not proceed to arbitration.

Line 11 checks whether arb_mask is all zeroes. If so, this means that all packets are masked, in which case the bits are all flipped to 1. In other words, since all of the arbiter ports have been masked, it follows that none of the arbiter ports has a high priority packet awaiting arbitration. Thus, the packets can all be considered low-priority packets and can proceed to arbitration.

The algorithm outputs a value arb_masked_requests at line 13, where arb_masked_requests is a bit string indicating whether a corresponding packet is masked. This bit string is obtained by performing a bitwise AND operation ("&") on arb_masked_requests and arb_mask. The algorithm outputs arb_masked_requests, which is then used to control which arbiter ports are employed in the next round of packet arbitration.

Note that priority masking algorithm 200 is merely one example of an algorithm that can be employed to implement the concepts described herein, and many variations are plausible. For example, the pseudocode example shows how packets received at ingress ports of the router can be processed for masking. In other implementations, a router can have an architecture with multiple arbitration stages, and priority masking can be performed using the disclosed techniques for a subset of packets that have already proceeded through a previous arbitration stage (e.g., instead of priority masking being performed on all packets arriving at a router input port or associated buffer). As another example, in some cases, the priority masking techniques described herein can be employed on packets in one or more internal queues that have been previously sorted by one or more criteria (e.g., instead of being performed in order as packets arrive at the input ports of the router).

As another example of how priority masking can be implemented differently than shown in the pseudocode for priority masking algorithm 200, consider an implementation that decrements QoS_counter under different circumstances. The description above relates to scenarios where QoS_counter is decremented when a packet leaves the router, but the QoS counter could instead be decremented when a packet leaves a particular queue, for instance. In these scenarios, further downstream processing could be employed on packets leaving that queue, with the priority masking being implemented to prioritize which packets arbitrate for that queue without necessarily considering when the packets ultimately leave the router itself.

The following describes a number of examples of how priority masking algorithm 200 can be implemented. However, note that the examples are relatively simple for the purpose of illustrating the disclosed concepts. In practice, there may be multiple arbiters in parallel and there may also be multiple arbitration stages. For instance, in an implementation where there are 40 queues and each arbiter has 4 ports, there may be 10 arbiters running in parallel. Further, it is also possible that there is another arbiter stage whose input ports are connected to the outputs of the first stage arbiters, so there are multiple levels of hierarchical arbitration. Thus, the disclosed concepts are not limited to single stage arbitration, but rather can be employed with hierarchical arbitration schemes as well.

### FIRST ARBITRATION EXAMPLE

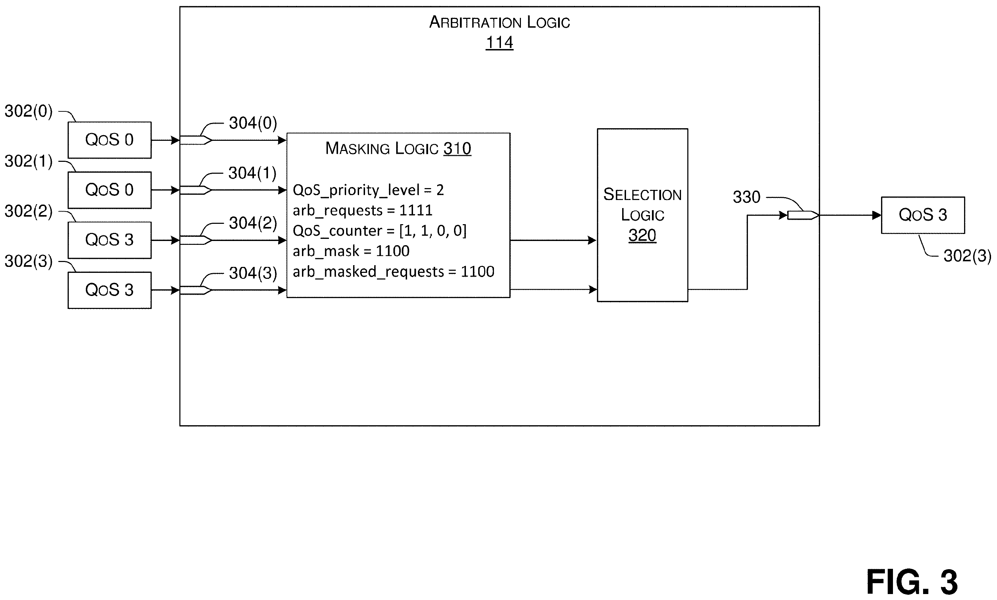

FIG. 3 illustrates a first arbitration example. Arbitration logic 114 includes masking logic 310 and selection logic 320. Masking logic 310 can implement priority masking algorithm 200. Selection logic 320 can process packets that are not filtered from arbitration by the masking logic to select a packet for access to a resource, as described more below.

Packet 302(0) is received at arbiter input port 304(0), packet 302(1) is received at arbiter input port 304(1), packet 302(2) is received at arbiter input port 304(2), and packet 302(3) is received at arbiter input port 304(3). Packets 302(0) and 302(1) have QoS values of 0, and packets 302(2) and 302(3) have QoS values of 3.

Masking logic 310 starts with QoS_priority_level set to 2. Since there is a packet available at each of the four arbiter input ports, arb_requests is set to 1111. Here, assume that there is one queue per arbitration port. QoS_counter is set to [1, 1, 0, 0] since there are packets with QoS values exceeding QoS_priority_level at arbitration ports 302(2) and 302(3) but not at arbitration ports 302(1) or 302(0).

Algorithm 200 will set arb_mask to 1100 based on the respective values in QoS_counter. Next, arb_masked_requests is set to 1100 by performing the bitwise AND operation in line 13 of priority masking algorithm 200, which sets the bits of arb_masked_requests to 1 only if the corresponding bits in arb_requests and arb_mask are both 1. Packets 302(2) and 302(3) proceed to selection logic 320, which can select one of these packets using any arbitration scheme (e.g., round robin, weighted round robin, etc.). In this example, packet 302(3) is selected and proceeds to arbitration output port 330 for output to a router output port, a buffer, etc.

### SECOND ARBITRATION EXAMPLE

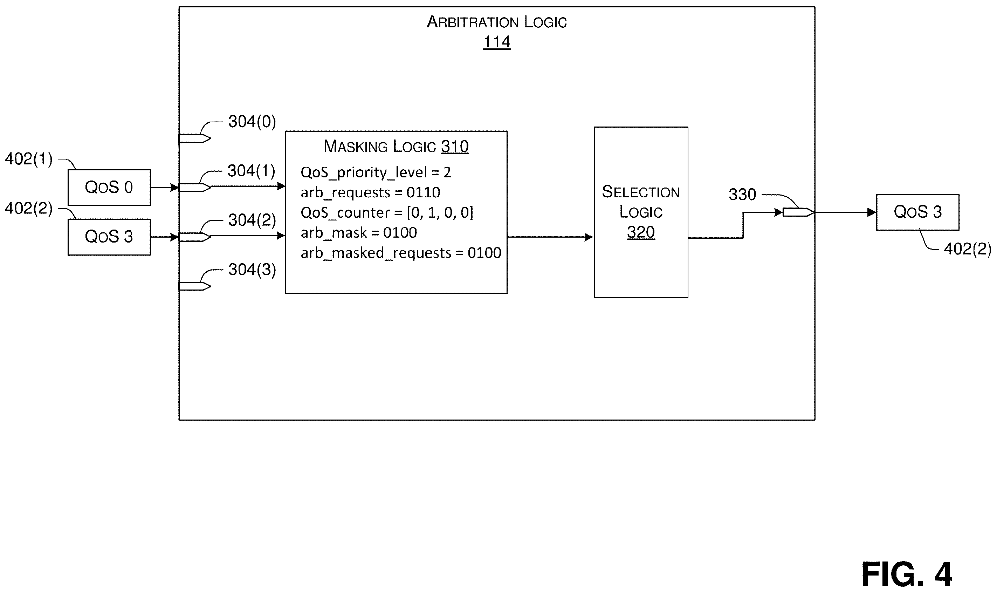

FIG. 4 illustrates a second arbitration example. Packet 402(1) is received at arbiter input port 304(1) and packet 402(2) is received at arbiter input port 304(2). Packet 402(1) has a QoS value of 0 and packet 402(2) has a QoS value of 3.

Masking logic 310 starts with QoS_priority_level set to 2. The value of arb_requests is 0110 since only arbiter input port 304(1) and 304(2) have packets awaiting arbitration. QoS_counter is set to [0, 1, 0, 0] since only arbiter input port 304(2) has a packet with a QoS value exceeding QoS_priority_level.

Algorithm 200 will set arb_mask to 0100 based on the values in QoS_counter. Next, arb_masked_requests is set to 0100 by performing the bitwise AND operation in line 13 of priority masking algorithm 200. Only packet 402(2) proceeds to selection logic 320 and thus will go to arbitration output port 330.

### THIRD ARBITRATION EXAMPLE

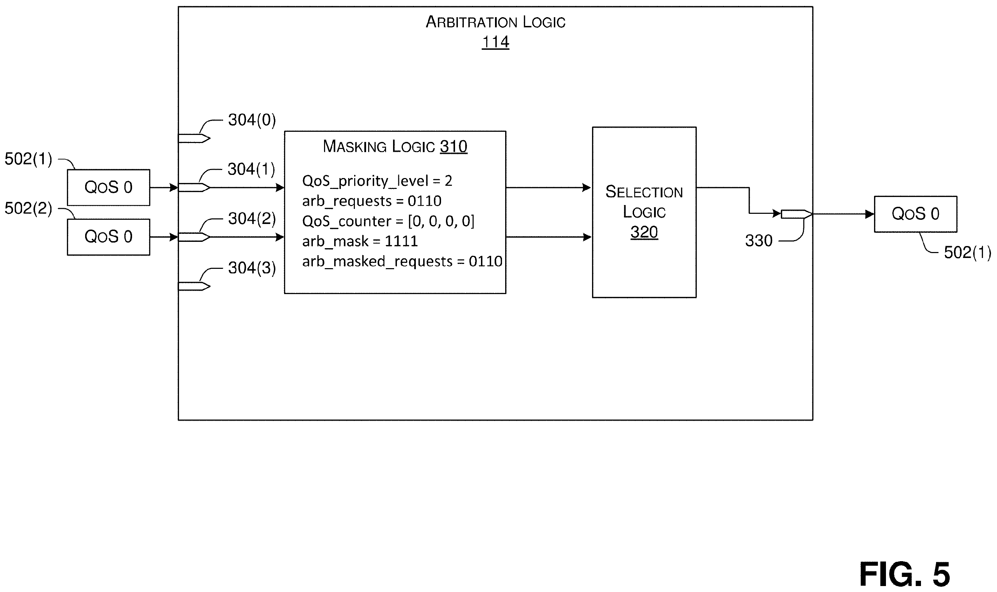

FIG. 5 illustrates a third arbitration example. Packet 502(1) is received at arbiter input port 304(1) and packet 502(2) is received at arbiter input port 304(2). Both packets have a QoS value of 0.

Masking logic 310 starts with QoS_priority_level set to 2. The value of arb_requests is 0110 since only arbiter input port 304(1) and 304(2) have packets awaiting arbitration. QoS_counter is set to [0, 0, 0, 0] since no packets current at an arbiter input port have a QoS value exceeding QoS_priority_level.

Algorithm 200 will set arb_mask to 0000 initially based on the values in QoS_counter. The if statement at line 11 will evaluate to true, and then line 12 will execute flipping the bits of arb_mask to 1111. Next, arb_masked_requests is set to 0110 by performing the bitwise AND operation in line 13 of priority masking algorithm 200. Both packets 502(1) and 502(2) proceed to selection logic 320. In this example, packet 502(1) is selected to go to arbitration output port 330.

### FOURTH ARBITRATION EXAMPLE

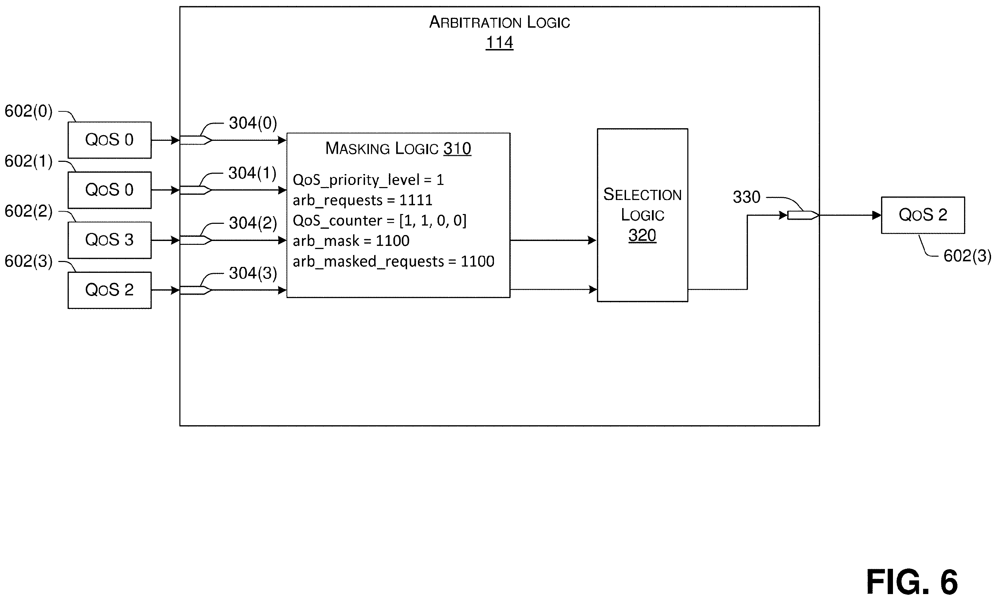

FIG. 6 illustrates a fourth arbitration example. Packet 602(0) is received at arbiter input port 304(0), packet 602(1) is received at arbiter input port 304(1), packet 602(2) is received at arbiter input port 304(2), and packet 602(3) is received at arbiter input port 304(3). Packets 602(0) and 602(1) have QoS values of 0, packet 602(2) has a QoS value of 3, and packet 602(3) has a QoS value of 2.

Masking logic 310 starts with QoS_priority_level set to 1. Since there is a packet available at each of the four arbitration ports, arb_requests is set to 1111. QoS_counter is set to [1, 1, 0, 0] since arbiter input port 602(2) and 602(3) both have packets with a QoS value exceeding QoS_priority_level that are awaiting arbitration.

Algorithm 200 will set arb_mask to 1100 based on the values in QoS_counter. Next, arb_masked_requests is set to 1100 by performing the bitwise AND operation in line 13 of priority masking algorithm 200. Packets 602(2) and 602(3) proceed to selection logic 320, which can select one of these packets using any arbitration scheme. In this example, packet 602(3) is selected and proceeds to arbitration output port 330 for output to a router output port, a buffer, etc. Note that this example conveys a scenario where a packet with a lower QoS value can win arbitration over a packet with a higher QoS value, as packet 602(3) has a lower QoS value of 2 than packet 602(2), which has a QoS value of 3.

### FIFTH ARBITRATION EXAMPLE WITH QUEUING

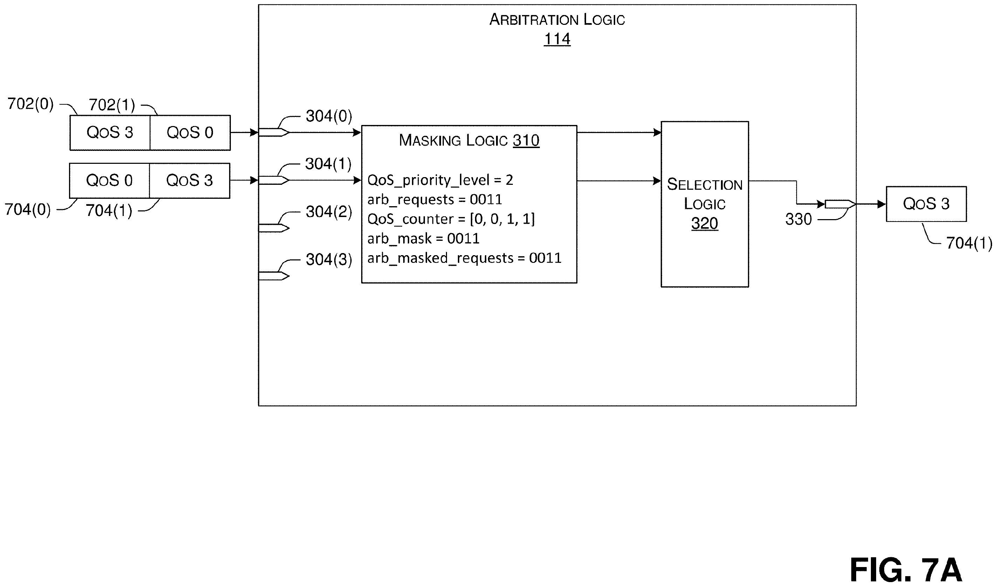

FIGS. 7A through 7D show an example where multiple queued packets are processed by arbitration logic 114. FIG. 7A starts with packets 702(0) and 702(1) in a first queue associated with arbiter input port 304(0) and packets 704(0) and 704(1) are in a second queue associated with arbiter input port 304(1). Packet 702(0) has a QoS value of 3, packet 702(1) has a QoS value of 0, packet 704(0) has a QoS value of 0, and packet 704(1) has a QoS value of 3. Note that packet 702(0) is being blocked by packet 702(1). Thus, even though packet 702(1) has a QoS value of 0, the packet is blocking another packet with a higher QoS value.

Since there is a packet available at the first two arbitration ports, arb_requests is set to 0011. Algorithm 200 will set QoS_counter to [0, 0, 1, 1]. Although packet 702(1) currently awaiting arbitration at arbiter input port 304(0) does not have a QoS value higher than QoS_priority_level, it is blocking a packet 702(0) that does have a QoS value higher than QoS_priority_level. In addition, packet 704(1) has a QoS value higher than QoS_priority_level.

Algorithm 200 will set arb_mask to 0011 based on the values in QoS_counter. Next, arb_masked_requests is set to 0011 by performing the bitwise AND operation in line 13 of priority masking algorithm 200. Packets 702(1) and 704(1) proceed to selection logic 320, which can select one of these packets using any arbitration scheme. In this example, packet 704(1) is selected and proceeds to arbitration output port 330 for output to a router output port, a buffer, etc.

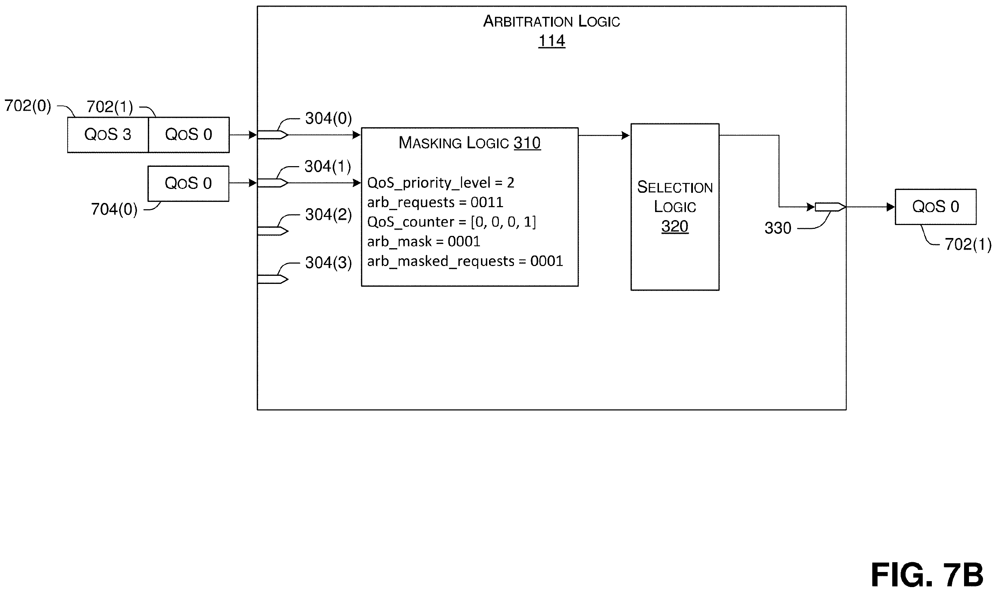

Next, as shown in FIG. 7B, algorithm 200 updates QoS_counter to [0, 0, 0, 1] since there are no remaining packets in the queue for arbiter input port 304(1) with QoS values higher than the QoS_priority_level. In line 9 of algorithm 200, the test for the QoS_counter will fail for the queue for arbiter input port 304(1), and thus the corresponding bit in arb_mask will be set to 0, resulting in arb_mask being set to 0001. Algorithm 200 then sets arb_masked_requests to 0001 by performing the bitwise AND operation in line 13 of priority masking algorithm 200. Thus, only packet 702(1) proceeds to selection logic 320, and then proceeds to arbitration output port 330 for output to a router output port, a buffer, etc.

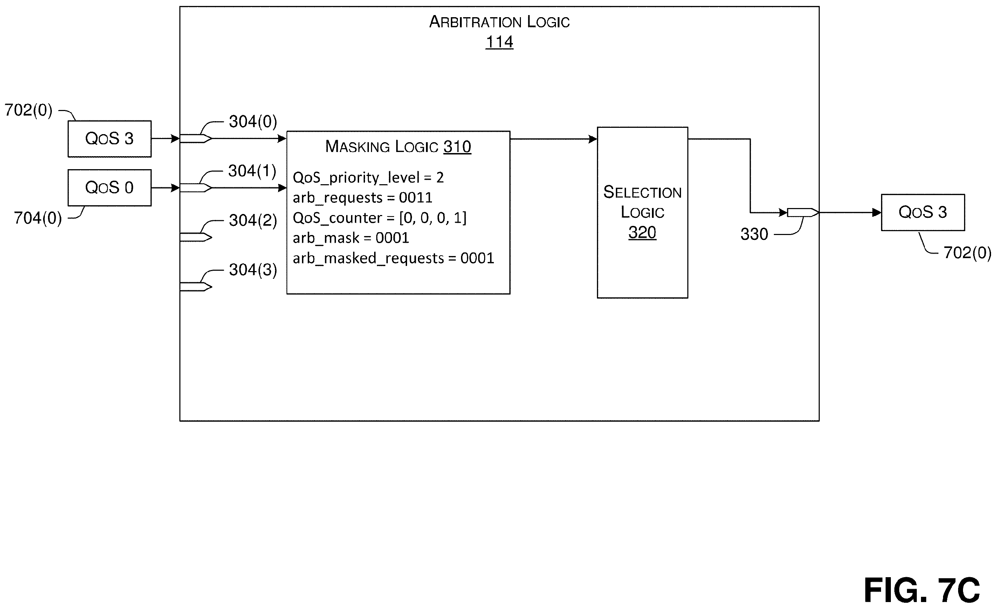

Next, as shown in FIG. 7C, QoS_counter remains at [0, 0, 0, 1], since there is still a packet 702(0) in the queue for arbiter input port 304(0) that exceeds QoS_priority_level. The values for arb_requests, arb_mask, and arb_masked_requests do not change, and only packet 702(0) proceeds to selection and then proceeds to arbitration output port 330 for output to a router output port, a buffer, etc.

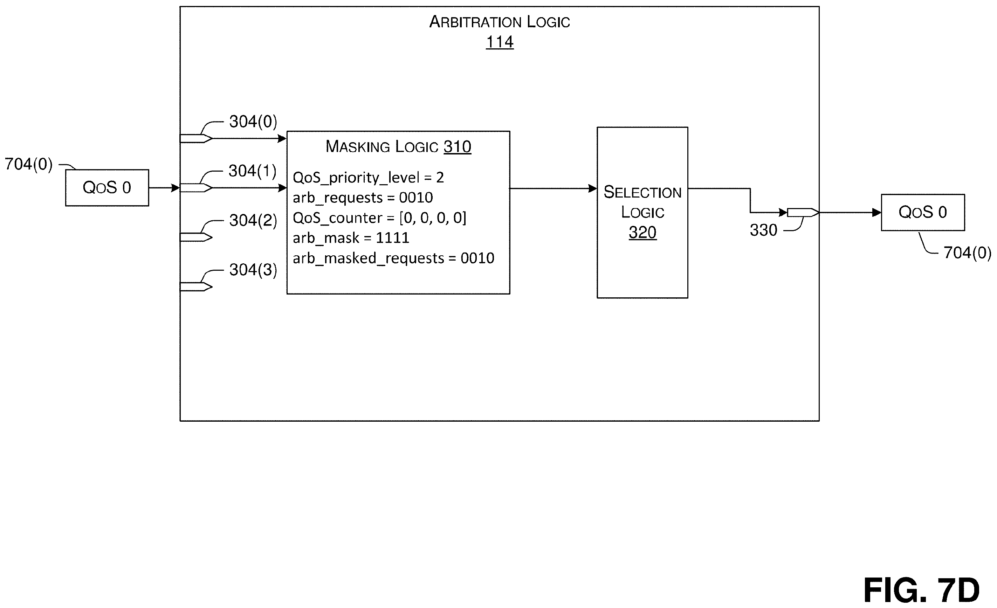

Next, as shown in FIG. 7D, QoS_counter is set to [0, 0, 0, 0] since there are no packets in the queue for arbiter input port 304(0) that exceed QoS_priority_level. Algorithm 200 sets arb_requests to 0010 since there are no packets at all besides packet 704(0) awaiting arbiter input port 304(1). The value for arb_mask will remain all 0's in the for loop at lines 8-10 because the QoS counters are all zero. Line 12 will set arb_mask to all 1 bits (1111), and then arb_masked_requests results with a value of 0010. Only packet 704(0) proceeds to selection and then proceeds to arbitration output port 330 for output to a router output port, a buffer, etc.

Referring back to FIG. 7A, note that the values of QoS_counter can be greater than 1. For instance, assume there is another packet with a QoS priority value of 3 scheduled ahead of packet 702(1). In this case, QoS_counter would start with the values [0, 0, 1, 2] since there are two high priority packets in the first queue.

In addition, note that FIGS. 7A through 7D are described with separate queues associated with each arbiter input port for simplicity. However, in some cases, each queue is associated with a router input port, router output port, or other resource. Thus, the packets arriving at a given arbiter input port can be from different queues. Priority masking algorithm 200 can check the queue associated with each packet to determine the appropriate index to use for QoS_counter in lines 3, 6, and 9 of the algorithm.

In other implementations there may be multiple queues per input port or any other resource. Such implementations can provide packet scheduling logic that can assign packets coming from the same ingress port to different queues, or packets targeting the same egress ports to different queues. The disclosed priority masking techniques can be readily extended to such implementations to prioritize access of individual packets to any type of resource (ports, buffers, queues, etc.).

### EXAMPLE NETWORK SYSTEM

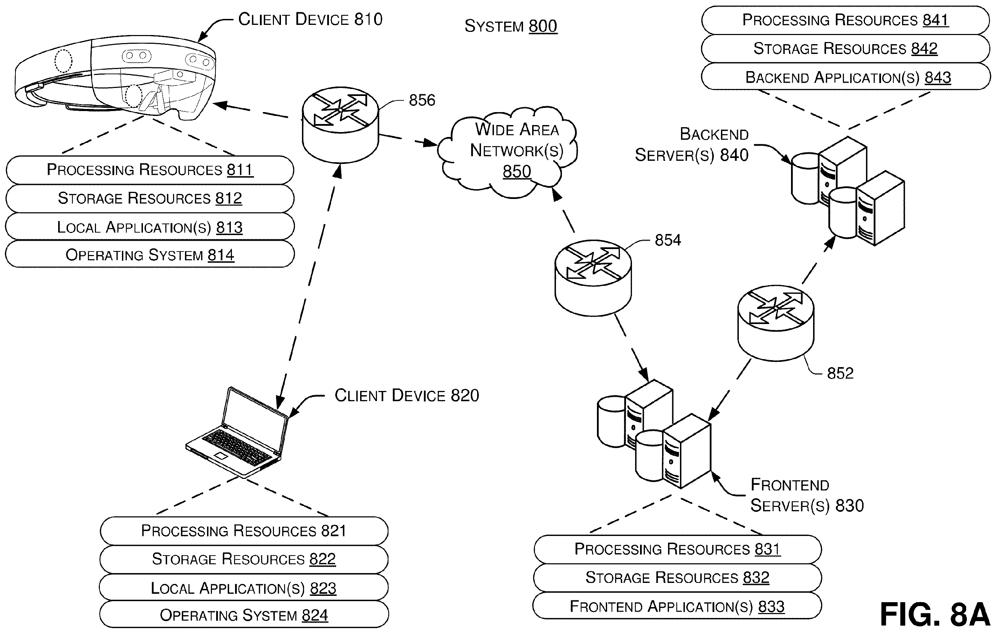

The present implementations can be performed in various scenarios on various devices. FIG. 8A shows an example system 800 in which the present implementations can be employed, as discussed more below.

As shown in FIG. 8A, system 800 includes a client device 810, a client device 820, frontend server(s) 830, backend server(s) 840, connected by one or more wide area network(s) 850. Note that the client device can be embodied both as a mobile device such as smart phones or tablets, as well as stationary devices such as desktops, server devices, etc. Likewise, the servers can be implemented using various types of computing devices. In some cases, any of the devices shown in FIG. 8A, but particularly the servers, can be implemented in data centers, server farms, etc. System 800 also includes routers 852, 854, and 856, as described more below.

Client device 810 can have processing resources 811 and storage resources 812, client device 820 can have processing resources 821 and storage resources 822, frontend server(s) 830 can have processing resources 831 and storage resources 832, and backend server(s) 840 can have processing resources 841 and storage resources 842. Each of these devices may also have various modules that function using the processing and storage resources to perform the techniques discussed herein. The storage resources can include both persistent storage resources, such as magnetic or solid-state drives, and volatile storage, such as one or more random-access memory devices. In some cases, the modules are provided as executable instructions that are stored on persistent storage devices, loaded into the random-access memory devices, and read from the random-access memory by the processing resources for execution.

Client device 810 can include one or more local application(s) 813, which can include a virtual reality application, video game, teleconferencing application, streaming video and/or audio application, productivity application, etc. Client device 810 can also have an operating system 814 that perform various functions on the client device, such as file system or memory management, security, process management, etc. The operating system can provide various application programming interfaces that can be called by the local application(s), e.g., libraries for graphics manipulation, networking, printing or other input/output operations, etc.

Client device 820 can include one or more local application(s) 823, which can also include a virtual reality application, video game, teleconferencing application, streaming video and/or audio application, productivity application, etc. Client device 820 can also have an operating system 824 that can perform similar functionality to operating system 814.

Frontend server(s) 830 can host one or more frontend applications 833 that interface directly with client device 810 and/or 820. Backend server(s) 840 can host one or more backend applications 843 that the client devices can access via the frontend server(s). For instance, the frontend applications can provide a user interface that allows a user to find, retrieve, and/or control streaming video or audio content, modify a user profile, communicate with other users, etc. The backend applications can implement video or audio storage, encoding, audio or video content delivery, etc.

Routers 852, 854, and 856 be implemented using the architecture shown in FIG. 1, and can route traffic within system 800. For instance, backend server(s) 840 can communicate with frontend server(s) 830 via router 852. Frontend server(s) 830 can communicate with client devices 810 and/or 820 by sending traffic to wide area network(s) 850 via router 854. Router 856 can route traffic received over the wide area network(s) 850 to the respective client devices 810 and 820.

The individual routers can implement QoS priority masking as described elsewhere herein. For instance, consider a scenario where a user is playing a virtual reality video game using client device 810. Backend server(s) 840 might execute the game and send streaming video and/or audio to the client device 810. The user might also employ client device 820 to make configuration changes, chat with other users, or change which video game they are playing by interacting with frontend server(s) 830.

Generally speaking, streaming video and/or audio from backend server(s) 840 to the client device 810 may be more latency-sensitive and/or bandwidth sensitive than the communications between client device 810 and frontend server(s) 830. Thus, in some implementations, router 856 can be configured to assign higher QoS values to traffic communicated to/from backend server(s) 840 than traffic communicated to/from frontend server(s) 830.

As another example, frontend server(s) 830 and/or backend server(s) 840 could include different servers with different QoS values. For instance, the frontend and backend servers could be provided in a data center, where one of the frontend servers provides access to a free version of a streaming video service on one of the backend servers, and another pair of frontend and backend servers implements the service for paid subscribers. Traffic to/from the pair of servers that implement the subscription service could have higher QoS values than traffic to/from the pair of servers implementing the free version.

### EXAMPLE NETWORK-ON-CHIP

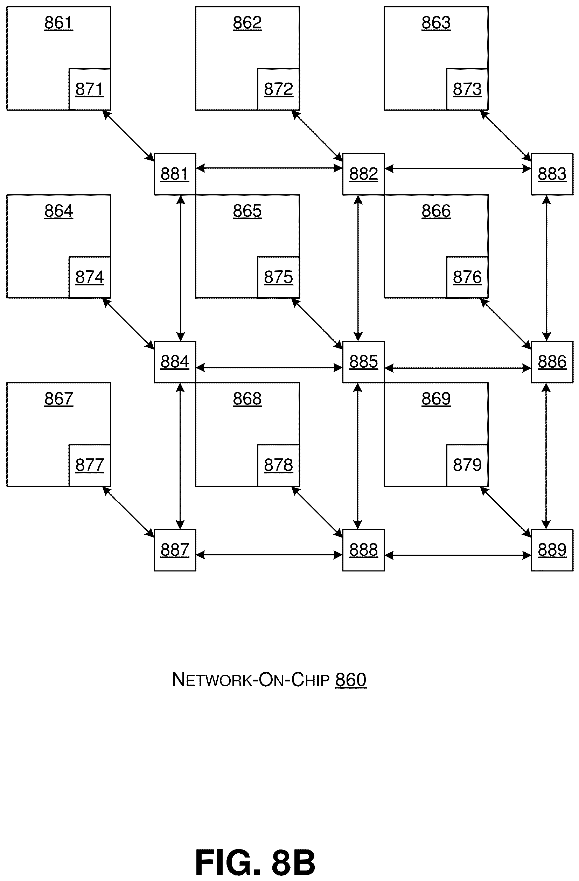

As noted previously, the disclosed techniques can also be implemented in a network-on-chip or "NoC." FIG. 8B shows an example NoC 860, which includes an endpoint 861 with a network interface 871, an endpoint 862 with a network interface 872, an endpoint 863 with a network interface 873, an endpoint 864 with a network interface 874, an endpoint 865 with a network interface 875, an endpoint 866 with a network interface 876, an endpoint 867 with a network interface 877, an endpoint 868 with a network interface 878, and an endpoint 869 with a network interface 879.

Each of the respective endpoints can be a processing core, such as a central processing unit (CPU), graphics processing unit (GPU), neural processing unit (NPU), field-programmable gate array (FPGA), application-specific integrated circuit (ASIC), etc. The endpoints can also include shared cache, memory, and/or peripheral interfaces. Each endpoint can have an assigned IP address, and the endpoints can communicate with one another via their respective network interfaces. The communications can employ network protocols such as TCP/IP, UDP, ethernet, and/or custom protocols designed specifically for NoC communications.

NoC 860 also includes router 881, router 882, router 883, router 884, router 885, router 886, router 887, router 888, and router 889. Each router can be implemented using the architecture shown in FIG. 1. The respective routers can route communications among the various endpoints in NoC 860. Various QoS priority schemes can be employed. For instance, in some cases, traffic to/from an NPU endpoint could have a higher QoS than traffic to/from a CPU or GPU endpoint. In other cases, traffic between any type of processing core endpoint could have a higher priority than traffic from a peripheral device to memory. As another example, cache misses or cache prefetching traffic could have priority over traffic to/from memory.

### EXAMPLE METHOD

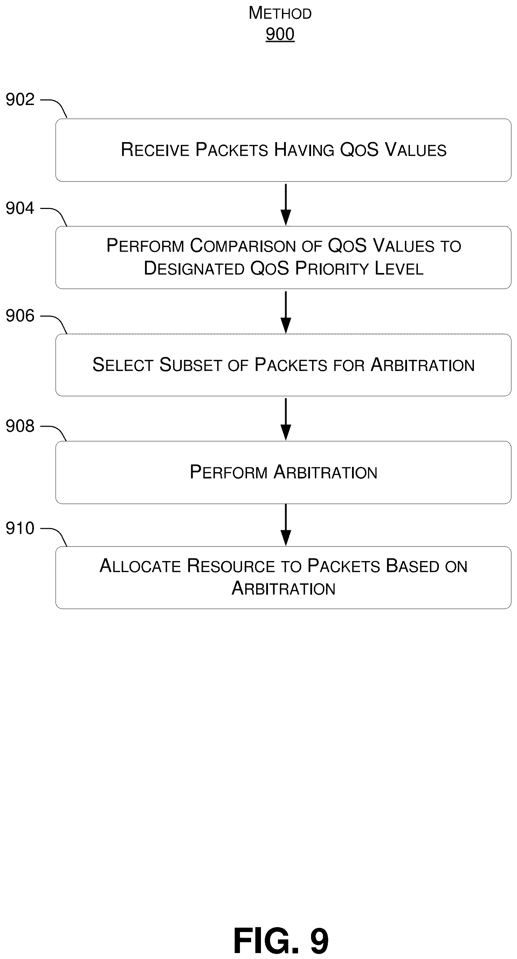

FIG. 9 illustrates an example computer-implemented method 900, consistent with some implementations of the present concepts. Method 900 can be implemented on many different types of devices, e.g., by a router or another type of networking hardware, by one or more cloud servers, by a client device such as a laptop, tablet, or smartphone, or by combinations of one or more servers, client devices, etc.

Method 900 begins at block 902, where packets having respective QoS priority values are received. For instance, in some cases the QoS priority values are determined by a network device, such as a router, that receives the packets. For instance, a table or database can be employed to map packet characteristics to QoS values.

Method 900 continues at block 904, where the QoS values are compared to a designated QoS value. As discussed above, in some cases the designated QoS value is a configurable value stored in a register. In some cases, the designated QoS value is static, and in other cases can change over time in response to changing network conditions.

Method 900 continues at block 906, where a subset of packets is selected for arbitration. For instance, the subset of packets can be packets that have QoS values exceeding the designated QoS level. The subset can also include other packets that are blocking the packets with QoS values exceeding the designated QoS value. For instance, a packet that has a QoS value below the designated QoS value may nevertheless be selected for arbitration if that packet is queued in front of another packet with a QoS value above the designated QoS value. As noted above, queue-specific counters can be employed to track which queues have high priority (e.g., QoS priority values exceeding the designated QoS priority level) packets, and packets from those queues can be selected for arbitration while masking off packets from other queues.

Method 900 continues at block 908, where arbitration is performed on the selected subset of packets. Any arbitration algorithm can be employed to select individual packets during the arbitration. For example, round robin scheduling, weighted round robin scheduling, fair queuing, and weighted fair queuing are just a few examples of arbitration algorithms that can be employed consistent with the disclosed concepts.

Method 900 continues at block 910, where a resource is allocated to the individual packets based on the arbitration. For instance, the packet that wins a given around of arbitration can be assigned to an output port of a router, to a buffer associated with an output port, etc.

### EXAMPLE GUI

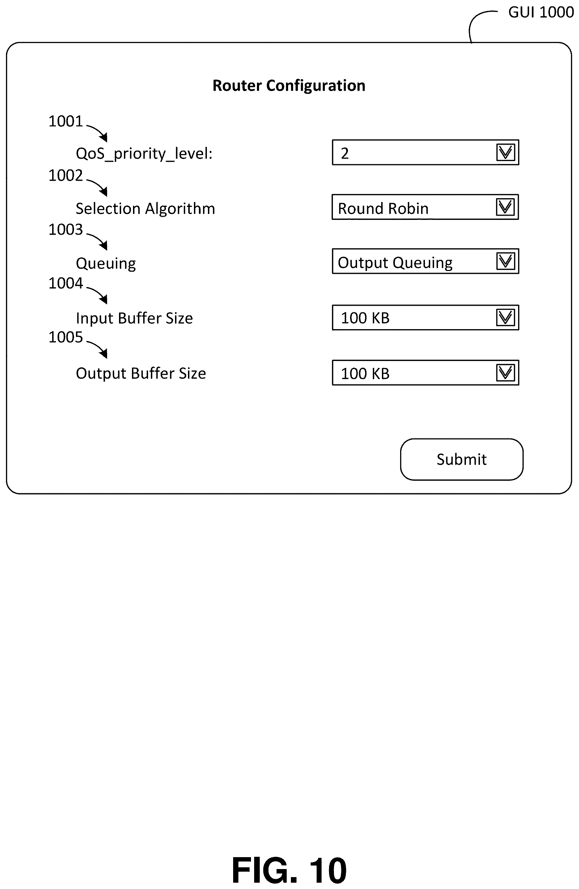

FIG. 10 shows a configuration GUI 1000 that can be employed to configure a router or other networking hardware to implement the disclosed concepts. For instance, the configuration GUI includes a QoS priority level element 1001 that allows a user to specify the designated QoS level. In some cases, this value is written to a register on the network device. Here, the configuration GUI is shown with the user having selected a QoS_priority_level of 2. Other available values for QoS_priority_level (e.g., 0, 1, and 3 in the examples above) can also be chosen by the user.

Selection algorithm element 1002 allows the user to specify the selection algorithm employed for selecting a packet for arbitration. Here, the configuration GUI is shown with the user having selected a round robin algorithm as the basis for selecting packets during arbitration. Other options can include weighted round robin scheduling, fair queuing, weighted fair queuing, etc.

Queuing element 1003 allows the user to specify a queuing scheme. Here, the configuration GUI is shown with the user having selected an output queuing scheme, where received packets are queued based on the output ports to which they are assigned. Other options can include input queuing where received packets are queued based on the output ports to which they are assigned, virtual queuing approaches that associate multiple virtual queues with one or more input or output ports, etc.

Input buffer size element 1004 allows the user to specify input buffer sizes for each input port. Here, the configuration GUI is shown with the user having selected a 100 KB input buffer size. Other options can be available depending on the hardware capabilities of the router being configured.

Output buffer size element 1005 allows the user to specify output buffer sizes for each output port. Here, the configuration GUI is shown with the user having selected a 100 KB output buffer size. Other options can be available depending on the hardware capabilities of the router being configured.

### EXAMPLE USE CASES

The techniques described above can be employed for a wide range of use cases. For instance, consider a data center with multiple servers. As indicated above, different QoS priority values could be employed for paid vs. free versions of a streaming audio, video, and/or video gaming service. As another example, consider a data center that streams both video and audio to end user client devices, e.g., for teleconferencing. One plausible implementation could utilize higher QoS priority values for audio traffic than for video traffic, e.g., since users tend to rely more on hearing spoken words for communication with one another than they do visible gestures or facial expressions.

As another example, consider a data center that provides streaming video games. Some strategy video games, such as chess, checkers, or card games, can still provide a high-quality end user experience with relatively high latency and/or low bandwidth, since these types of games typically are turn-based and do not involve rapidly-changing visual or audio effects in response to frequent user inputs. On the other hand, an action game such as car racing game or first-person shooter game might provide a relatively poor user experience if latency or bandwidth is insufficient, e.g., the game might take too long to respond to user inputs and/or need to use a lower video/audio resolution due to network constraints. Thus, in some implementations, strategy video games may be assigned lower QoS priority levels than action video games.

As another example, consider a client device such as an augmented reality or virtual reality headset. In some cases, a user might interact with a changing virtual world, where the headset downloads additional virtual content as the user moves to different locations in the real world. At the same time, the user may be constantly interacting with virtual objects present in the part of the virtual world that has already been downloaded. In some implementations, the QoS values for server traffic downloading the virtual world can increase as the user nears the "edge" of the currently-downloaded portion of the virtual world. In other words, if the user is moving toward a new section of the virtual world that has not yet been downloaded, the QoS priority levels of that traffic can be relatively low at first and then increase as the user gets closer to the new section.

In still further cases, certain services can have relatively higher or lower QoS values. For instance, some implementations may use relatively low QoS values for mail traffic, such as Post Office Protocol 3 ("POP3"), Internet Message Access Protocol ("IMAP"), or Simple Mail Transfer Protocol ("SMTP"). On the other hand, voice over internet protocol ("VoIP") services can be assigned relatively high QoS values. Generally speaking, users may find that a slightly delayed email is significantly less problematic than degraded audio quality, and thus it might be useful to prioritize VoIP traffic over email traffic in this manner.

As another example, consider a data center that trains large machine learning models and then offers a service where users can access the machine learning models once they are trained. Some implementations could provide a lower QoS value for network traffic used for training (e.g., retrieving training examples from over an external network) and a higher QoS value for inference traffic received from clients accessing the models once they are trained. In further cases, inference traffic can be prioritized differently, e.g., network traffic related to time-sensitive financial predictions by one trained model could be prioritized over image-generating traffic produced by another trained model.

In addition, some implementations may employ multiple routers in a serial fashion. For instance, a first router may be provided with a designated QoS priority level of 1 out of a range from 0 to 3. Thus, the first router can prioritize any packet with a QoS priority level of 2 or 3 (or queued ahead of such packets) above other packets with QoS priority levels of 0 or 1. The first router can then send packets to a second router with a designated QoS priority level of 2, which will prioritize packets with a QoS priority level of 3 or packets queued ahead of QoS priority level 3 packets. In this manner, packets with QoS priority level 3 are prioritized over QoS priority level 0, 1, and 2 packets, and packets with QoS level 2 packets are prioritized over QoS priority level 0 and 1 packets. Said another way, two routers can be employed together to provide three different quality of service tiers. This approach can be further extended by adding another router to provide four QoS tiers, e.g., one for each of the four available QoS priority levels.

In other cases, a similar approach can be employed where multiple arbitration layers are provided in a single router, and each arbitration layer can employ a single priority masking layer as described previously. For instance, a first arbitration layer may be provided with a designated QoS priority level of 1 out of a range from 0 to 3. Thus, the first arbitration layer can prioritize any packet with a QoS priority level of 2 or 3 (or queued ahead of such packets) above other packets with QoS priority levels of 0 or 1. The first arbitration layer can then send packets to a second arbitration layer with a designated QoS priority level of 2, which will prioritize packets with a QoS priority level of 3 or packets queued ahead of QoS priority level 3 packets. In this manner, packets with QoS priority level 3 are prioritized over QoS priority level 0, 1, and 2 packets, and packets with QoS level 2 packets are prioritized over QoS priority level 0 and 1 packets. Said another way, two arbitration layers can be employed together (each with a single priority masking layer) to provide three different quality of service tiers. Again, this approach can be further extended by adding another arbitration layer to provide four QoS tiers, e.g., one for each of the four available QoS priority levels.

In addition, note that priority masking algorithm 200 is just one example of how the disclosed concepts can be implemented. For instance, lines 2 and 5 of priority masking algorithm 200 use "greater than" operators in the comparison of packet QoS values to QoS_priority_level. In other examples, a "greater than or equal to" operator can be employed with QoS_priority_level increased by one to provide a logically equivalent algorithm.

As another example, some implementations can allow the designated QoS priority level to change over time. For instance, consider a data center that becomes overloaded with network traffic at a particular time, e.g., a holiday where people are contacting each other frequently using video calls. The QoS priority level in one or more routers in the data center could be increased as the data center becomes overloaded with network traffic and then reduced back to a lower level as network traffic subsides.

### TECHNICAL EFFECT

As noted above, one plausible approach for implementing QoS priority masking in a networking device, such as a router, involves utilizing separate priority masking hardware layers for each level of QoS. Thus, for instance, a priority masking layer for QoS level 3 can include hardware to mask out packets with QoS levels of 0, 1, or 2. The priority masking layer can also include signaling hardware to ensure that other packets blocking QoS level 3 packets are not masked out and can also proceed to arbitration. This priority masking hardware can be duplicated for each supported QoS level, which would then involve 3 separate layers of priority masking hardware.

The disclosed techniques can be employed to implement priority masking in a network device, such as a router, using a flexible and efficient approach that does not necessarily involve separate priority masking hardware layers for each supported level of QoS. Rather, the disclosed implementations can use a thresholding approach where packets that exceed a designated QoS level are treated collectively as high priority packets and can proceed to arbitration. In addition, in lieu of complex signaling hardware to identify lower QoS packets that are blocking high QoS packets, the disclosed techniques employ queue-specific counters. The use of counters obviates the use of complex signaling hardware while still ensuring that lower QoS packets blocking high QoS packets proceed to arbitration to mitigate head-of-line blocking of the high QoS packets.

The hardware savings provided by the disclosed concepts not only reduce overall complexity, but also can provide power savings and reduced packaging sizes for routers. Furthermore, the disclosed concepts also allow for flexible reconfiguration of priority masking simply by increasing or decreasing the designated QoS priority level. These advantages can be provided while still ensuring that QoS priority constraints are met for specific applications, services, and/or devices for which higher QoS service levels are deemed appropriate.

### DEVICE IMPLEMENTATIONS

As noted above with respect to FIG. 8A, system 800 includes several devices, including a client device 810, a client device 820, frontend server(s) 830, and backend server(s) 840, router 852, router 854, and router 856. As also noted, not all device implementations can be illustrated, and other device implementations should be apparent to the skilled artisan from the description above and below.

The term "device", "computer," "computing device," "client device," and or "server device" as used herein can mean any type of device that has some amount of hardware processing capability and/or hardware storage/memory capability. Processing capability can be provided by one or more hardware processors (e.g., hardware processing units/cores) that can execute computer-readable instructions to provide functionality. Computer-readable instructions and/or data can be stored on storage, such as storage/memory and or the datastore and, when executed, can cause a processor to perform acts. The term "system" as used herein can refer to a single device, multiple devices, etc.

Storage resources can be internal or external to the respective devices with which they are associated. The storage resources can include any one or more of volatile or non-volatile memory, hard drives, flash storage devices, solid state drives, and/or optical storage devices (e.g., CDs, DVDs, etc.), among others. As used herein, the terms "computer-readable media" and "computer-readable medium" can include signals. In contrast, the terms "computer-readable storage media" and "computer-readable storage medium" excludes signal. Computer-readable storage media includes "computer-readable storage devices." Examples of computer-readable storage devices include volatile storage media, such as RAM, and non-volatile storage media, such as hard drives, optical discs, solid state drives, flash memory, etc.

In some cases, the devices are configured with a general-purpose hardware processor and storage resources. Processors and storage can be implemented as separate components or integrated together as in computational RAM. In other cases, a device can include a system on a chip (SOC) type design. In SOC design implementations, functionality provided by the device can be integrated on a single SOC or multiple coupled SOCs. One or more associated processors can be configured to coordinate with shared resources, such as memory, storage, etc., and/or one or more dedicated resources, such as hardware blocks configured to perform certain specific functionality. Thus, the term "processor," "hardware processor" or "hardware processing unit" as used herein can also refer to central processing units (CPUs), graphical processing units (GPUs), neural processing units (NPUs), controllers, microcontrollers, processor cores, or other types of processing devices suitable for implementation both in conventional computing architectures as well as SOC designs.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

In some configurations, any of the modules/code discussed herein can be implemented in software, hardware, and/or firmware. In any case, the modules/code can be provided during manufacture of the device or by an intermediary that prepares the device for sale to the end user. In other instances, the end user may install these modules/code later, such as by downloading executable code and installing the executable code on the corresponding device.

Also note that devices generally can have input and/or output functionality. For example, computing devices can have various input mechanisms such as keyboards, mice, touchpads, voice recognition, gesture recognition (e.g., using depth cameras such as stereoscopic or time-of-flight camera systems, infrared camera systems, RGB camera systems or using accelerometers/gyroscopes, facial recognition, etc.), microphones, etc. Devices can also have various output mechanisms such as printers, monitors, speakers, etc.

Also note that the devices described herein can function in a stand-alone or cooperative manner to implement the described techniques. For example, the methods and functionality described herein can be performed on a single computing device and/or distributed across multiple computing devices that communicate over wide area network(s) 850. Without limitation, the system can also include one or more wired or wireless local area networks (LANs).

### ADDITIONAL EXAMPLES

This document relates to computer networking. For instance, the disclosed techniques provide for prioritizing packets based on Quality of Service ("QoS") levels within a networking device, such as a router. A router or other networking device consistent with the disclosed implementations can perform priority masking of received packets by comparing QoS priority values of the received packets to a designated QoS priority level. Packets having QoS priority values exceeding the designated QoS priority level can proceed to arbitration, whereas other packets can be masked to prevent them from proceeding to arbitration.

Various examples are described above. Additional examples are described below. One example includes a computer networking method comprising receiving packets having respective QoS priority values, performing comparisons of the respective QoS priority values of the received packets to a designated QoS priority level, based on the comparisons, selecting a subset of packets from the received packets for resource arbitration, performing resource arbitration on the selected subset of packets, and allocating a particular resource to individual packets of the selected subset based on the resource arbitration.

Another example can include any of the above and/or below examples where the selecting comprising selecting first packets having a first QoS priority value that exceeds the designated QoS priority level, selecting second packets having a second QoS priority value that exceeds the first QoS value, and including the first packets and the second packets in the subset of packets that are selected for resource arbitration.

Another example can include any of the above and/or below examples where the resource arbitration is performed on a round robin basis or a weighted round robin basis for the first packets and the second packets.

Another example can include any of the above and/or below examples where the selected packets include one or more other packets having other one or more other QoS priority values that are below the designated QoS priority level.

Another example can include any of the above and/or below examples where at least one of the first packets or the second packets is blocked by the one or more other packets of the selected subset of packets.

Another example can include any of the above and/or below examples where the one or more other packets are scheduled in a particular queue ahead of the at least one of the first packets or the second packets.

Another example can include any of the above and/or below examples where the computer networking method further comprises excluding, from the subset, further packets in the particular queue that are scheduled behind the at least one of the first packets or the second packets.

Another example can include any of the above and/or below examples where the computer networking method further comprises maintaining a packet counter for the particular queue, the packet counter identifying a number of packets in the particular queue that have QoS values exceeding the designated QoS priority level.

Another example can include any of the above and/or below examples where the computer networking method further comprises incrementing the packet counter when packets having QoS priority values that exceed the designated QoS priority level are received by a router implementing the method.

Another example can include any of the above and/or below examples where the computer networking method further comprises decrementing the packet counter when the packets having QoS priority values that exceed the designated QoS priority level are emitted by the router.

Another example can include any of the above and/or below examples where the computer networking method further comprises when the packet counter is greater than zero, prioritizing resource arbitration for packets in the particular queue above resource arbitration for packets in another queue having another packet counter of zero, and when the packet counter and the another packet counter are both zero, performing resource arbitration between packets in the particular queue and packets in the another queue.

Another example can include a networking device comprising input ports configured to receive packets that arrive at the networking device, output ports configured to emit packets from the networking device, switching resources configured to selectively connect individual input ports to individual output ports, and a controller configured to determine respective QoS priority values of the received packets, perform comparisons of the QoS priority values of the received packets to a designated QoS priority level, based on the comparisons, select a subset of packets from the received packets for resource arbitration, perform resource arbitration on the selected subset of packets, and allocate a particular resource to individual packets of the selected subset based on the resource arbitration.

Another example can include any of the above and/or below examples where the particular resource comprises at least one of the output ports.

Another example can include any of the above and/or below examples where the particular resource comprises at least one buffer associated with at least one output port.

Another example can include any of the above and/or below examples where the controller is configured to store the designated QoS priority level in a register.

Another example can include any of the above and/or below examples where the controller is configured to maintain multiple queues storing received packets awaiting resource arbitration, and maintain queue packet counters that track a number of received packets exceeding the designated QoS priority level that are present in each respective queue.

Another example can include any of the above and/or below examples where the controller is configured to while a first queue has a first packet counter greater than zero and a second queue has a packet counter equal to zero, prevent packets in the second queue from proceeding to resource arbitration, and allow the packets in the second queue to proceed to resource arbitration when the first packet counter falls to zero.

Another example can include any of the above and/or below examples where embodied as a network-on-chip router.

Another example can include a network-on-chip comprising endpoints configured to communicate packets with different QoS priority values, and routers comprising input ports configured to receive the packets from the endpoints, output ports configured to emit the packets to the endpoints, switching resources configured to selectively connect individual input ports to individual output ports, and controllers configured to determine respective QoS priority values of the received packets, perform comparisons of the QoS priority values of the received packets to a designated QoS priority level, based on the comparisons, select a subset of packets from the received packets for resource arbitration, perform resource arbitration on the selected subset of packets, and allocate a particular resource to individual packets of the selected subset based on the resource arbitration.

Another example can include any of the above and/or below examples where the endpoints including one or more neural processing units.

### CONCLUSION

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other features and acts that would be recognized by one skilled in the art are intended to be within the scope of the claims.

## Claims

1. A computer networking method (900) comprising:
receiving (902) packets having respective QoS priority values;
performing (904) comparisons of the respective QoS priority values of the received packets to a designated QoS priority level;
based on the comparisons, selecting (906) a subset of packets from the received packets for resource arbitration;
performing (908) resource arbitration on the selected subset of packets; and
allocating (910) a particular resource to individual packets of the selected subset based on the resource arbitration.

2. The computer networking method of claim 1, the selecting comprising:
selecting first packets having a first QoS priority value that exceeds the designated QoS priority level;
selecting second packets having a second QoS priority value that exceeds the first QoS value; and
including the first packets and the second packets in the subset of packets that are selected for resource arbitration,
and optionally, wherein the resource arbitration is performed on a round robin basis or a weighted round robin basis for the first packets and the second packets.

3. The computer networking method of claim 2, wherein the selected packets include one or more other packets having other one or more other QoS priority values that are below the designated QoS priority level.

4. The computer networking method of claim 3, wherein at least one of the first packets or the second packets is blocked by the one or more other packets of the selected subset of packets.

5. The computer networking method of claim 4, wherein the one or more other packets are scheduled in a particular queue ahead of the at least one of the first packets or the second packets.

6. The computer networking method of claim 5, further comprising:
excluding, from the subset, further packets in the particular queue that are scheduled behind the at least one of the first packets or the second packets.

7. The computer networking method of claim 6, further comprising: maintaining a packet counter for the particular queue, the packet counter identifying a number of packets in the particular queue that have QoS values exceeding the designated QoS priority level.

8. The computer networking method of claim 7, further comprising:
incrementing the packet counter when packets having QoS priority values that exceed the designated QoS priority level are received by a router implementing the method; or
decrementing the packet counter when the packets having QoS priority values that exceed the designated QoS priority level are emitted by the router.

9. The computer networking method of claim 8, further comprising:
when the packet counter is greater than zero, prioritizing resource arbitration for packets in the particular queue above resource arbitration for packets in another queue having another packet counter of zero; and
when the packet counter and the another packet counter are both zero, performing resource arbitration between packets in the particular queue and packets in the another queue.

10. A networking device (100, 852, 854, 856, 860) comprising:
input ports (102) configured to receive packets that arrive at the networking device;
output ports (104) configured to emit packets from the networking device;
switching resources (120) configured to selectively connect individual input ports to individual output ports; and
a controller (110) configured to:
determine respective QoS priority values of the received packets;
perform comparisons of the QoS priority values of the received packets to a designated QoS priority level;
based on the comparisons, select a subset of packets from the received packets for resource arbitration;
perform resource arbitration on the selected subset of packets; and
allocate a particular resource to individual packets of the selected subset based on the resource arbitration.

11. The networking device of claim 10, wherein:
the particular resource comprises at least one of the output ports or at least one buffer associated with at least one output port; or
the controller is configured to store the designated QoS priority level in a register.

12. The networking device of any of claims 10 or 11, wherein the controller is configured to:
maintain multiple queues storing received packets awaiting resource arbitration; and
maintain queue packet counters that track a number of received packets exceeding the designated QoS priority level that are present in each respective queue;
and optionally, wherein the controller is further configured to:
while a first queue has a first packet counter greater than zero and a second queue has a packet counter equal to zero, prevent packets in the second queue from proceeding to resource arbitration; and
allow the packets in the second queue to proceed to resource arbitration when the first packet counter falls to zero.

13. The networking device of any of claims 10 to 12, embodied as a network-on-chip router.

14. A network-on-chip (860) comprising:
endpoints (861, 862, 863, 864, 865, 866, 867, 868, 869) configured to communicate packets with different QoS priority values; and
routers (881, 882, 883, 884, 885, 886, 887, 888, 889) comprising:
input ports (102) configured to receive the packets from the endpoints;
output ports (104) configured to emit the packets to the endpoints;
switching resources (120) configured to selectively connect individual input ports to individual output ports; and
controllers (110) configured to:
determine respective QoS priority values of the received packets;
perform comparisons of the QoS priority values of the received packets to a designated QoS priority level;
based on the comparisons, select a subset of packets from the received packets for resource arbitration;
perform resource arbitration on the selected subset of packets; and
allocate a particular resource to individual packets of the selected subset based on the resource arbitration.

15. The network-on-chip of claim 14, the endpoints including one or more neural processing units.
